# FASCICULE DE BREVET EUROPEEN

(11) **EP 2 326 225 B1**
(45) Date de publication et mention de la délivrance du brevet: **25.04.2018**
(21) Numéro de dépôt: 09807966.8
(22) Date de dépôt: 19.08.2009
(51) Int. Cl.: A47J 37/12, B65D 77/06, F28D 1/06

(54) **CONTENEUR DE RECUPERATION DE LIQUIDES USAGES**
BEHÄLTER ZUR LAGERN VON GEBRAUCHTEN FLÜSSIGKEITEN
CONTAINER FOR COLLECTING WASTE LIQUIDS

(30) Priorité: 21.08.2008 FR 0804666
(43) Date de publication de la demande: 01.06.2011
(73) Titulaire: MERIM SERVICES, 36800 Saint Gaultier (FR)
(72) Inventeur: MULLERIS, Jean-Jacques, F-92200 Neuilly sur Seine (FR)
(74) Mandataire: Debay, Yves
(86) Numéro de dépôt international: PCT/IB2009/006579
(87) Numéro de publication internationale: WO 2010/020858

(56) Documents cités:
- WO-A-99/00322
- DE-C1- 4 401 501
- FR-A- 2 813 067
- FR-A- 2 912 386
- GB-A- 2 165 562

## Description

La présente invention concerne le domaine de la gestion des liquides usagés tels que des produis inflammables, pétroliers ou encore alimentaires, et propose un conteneur de récupération de liquides usagés. Plus particulièrement, l'invention propose un conteneur de récupération d'huiles usagées, notamment alimentaires.

Actuellement, le problème rencontré avec le recyclage de l'huile est qu'il existe différents circuits de recyclage. Le premier est le circuit de l'alimentation animale. L'huile ayant un fort apport calorifique, certains fabricants d'aliments pour animaux l'utilisent dans leur composition. Cependant, ce type de recyclage est soumis à une réglementation très stricte. En effet, la qualité de l'huile doit être irréprochable. Par conséquent, cela nécessite d'avoir la certitude que l'huile recyclée n'a pas été polluée par un quelconque produit toxique ou impropre à la consommation. En effet, cette pollution est susceptible de polluer également la viande des animaux qui ont mangé les aliments à base d'huile polluée et donc de remettre en question la qualité de la viande. Ainsi, dans le secteur de la restauration, la tendance est en fait de mettre en place un système de traçabilité amont et aval de l'huile alimentaire usagée afin de s'assurer que l'huile ne sera pas introduite dans le circuit de production des aliments utilisés par les établissements de restauration.

Le deuxième circuit est le circuit de la production technique. Ce circuit de recyclage exige des qualités minimales de l'huile, notamment en ce qui concerne le taux d'acidité oléique.

Les contraintes de stockage et de manipulation de l'huile sont les suivantes. En règle générale, l'huile usagée se solidifie ou fige à une température ambiante de l'ordre de 20° à 30° en fonction de l'huile utilisée. Son stockage s'effectue par exemple, à l'aide de fûts à ouverture totale à remplacer périodiquement. Mais, cette technique présente des risques pour le personnel et est très contraignante en matière de stockage et de manipulation. En outre, du fait que l'huile peut se figer, le transfert de l'huile d'un contenant à un autre ne peut s'effectuer qu'à une température supérieure à la température de solidification.

Pour cela, le document EP 1 180 492 propose un conteneur de récupération d'huile alimentaire usagée comprenant une cuve fermée de volume déterminé comprenant sur le dessus, une conduite de vidange par aspiration de l'huile, une extrémité de la conduite de vidange étant située à proximité du fond de la cuve. La cuve comprend également à proximité du fond des moyens de chauffage pour amener l'huile à une température supérieure à sa température de solidification. Les moyens de chauffage sont déclenchés par des moyens de commande à un premier instant déterminé, ce premier instant déterminé étant choisi de sorte que l'huile stockée dans la cuve soit suffisamment liquide à un deuxième instant déterminé, choisi par l'utilisateur, pour pouvoir être vidangée par aspiration. Mais avec ce type de conteneur, l'huile alimentaire est en contact avec les moyens de chauffage. En effet, l'huile alimentaire usagée comprend également de l'eau et en présence d'une source de chaleur, cette eau provoque une fermentation qui génère une augmentation du taux d'acide oléique. Cette augmentation du taux d'acide oléique rend l'huile usagée difficile à recycler et/ou diminue sensiblement son prix de revente. En outre, le chauffage de l'huile alimentaire stockée dans ce conteneur est déclenché par l'utilisateur avant sa collecte de façon à ce que l'huile alimentaire soit chauffée suffisamment vite pour sa collecte. Cependant, les utilisateurs ont tendance à oublier de déclencher le chauffage de l'huile alimentaire ce qui impose que le camion de collecte est obligé de revenir une nouvelle fois pour effectuer la collecte. Le document GB 2 165 562
divulgue un autre conteneur de récupération d'huile alimentaire usagé avec un système de chauffage. La présente invention a pour but de pallier un ou plusieurs inconvénients de l'art antérieur et propose un conteneur de récupération d'huile alimentaire usagée permettant d'assurer le stockage en extérieur ou intérieur de l'huile sans dégradation de ses qualités, le chauffage de façon autonome de l'huile alimentaire et autorisant une vidange sous forme liquide de l'huile alimentaire. Ce but est atteint par l'invention, qui consiste en un conteneur selon la revendication 1. Selon une autre particularité, l'isolant est mis en place par simple chemisage sur le dessus et sur les parois latérales extérieures de la cuve et éventuellement par collage ou fixation vis-écrou sous le conteneur.

Selon une autre particularité, la cuve équipée du système de chauffage et recouverte par l'isolant et la bâche de protection est montée sur une palette de transport.

Selon une autre particularité, le conteneur comporte un système de détection du niveau de remplissage de la poche de la cuve prévu sur le dessus de la cuve.

Selon une autre particularité, la cuve comporte un évent formant notamment une prise d'air, l'évent étant obturé par un filtre à air anti-odeur permettant de supprimer, ou tout au moins réduire, la diffusion d'odeur liée au stockage du liquide usagé dans la poche de la cuve ou d'un système de sécurité de trop plein de la poche de la cuve) ou d'un ensemble composé d'un entonnoir à ouverture sécurisée (22) et d'un filtre à air anti-odeur (16).

Selon une autre particularité, l'épaisseur et la densité de l'isolant sont déterminées de façon à ce qu'elles soient suffisantes pour que le système de chauffage d'épaisseur réduite comprise entre 2 mm et 3 mm puisse maintenir avec une puissance de chauffage faible comprise entre 20 W et 200 W, convenablement régulée le liquide usagé à une température supérieure à sa température de solidification.

Selon une autre particularité, la bâche de protection est formée en polyester haute ténacité et comporte des caractéristiques d'adhérence au moins égale à 8 daN/5 cm² selon la norme NF EN ISO 2411, de tenue au froid et à la chaleur comprise entre -30°C et 70°C, d'ignifugation au moins égale à 100 mm/min selon la norme DIN 75 200, de résistance à la rupture au moins égale à 220/210 daN selon la norme NF EN ISO 1421 et de résistance à la déchirure au moins égale à 30/25 daN selon la norme DIN 53363.

Selon une autre particularité, un système de détection de fuite est prévu sur le dessus de la cuve et comporte un flotteur monté sur une tige verticale équipée soit d'un système électronique générant un signal représentatif du niveau de liquide mesuré par le flotteur soit d'un système mécanique indiquant par un témoin visuel le niveau de liquide mesuré par le flotteur, le flotteur et la tige verticale étant disposés dans le dégagement formé par la cuve et la poche de façon à ce que si la poche fuit ou se rompt, le liquide usagé se déverse à l'extérieur de la poche mais dans la cuve ce qui fait remonter le flotteur, dans le cas d'un système électronique, celui-ci génère le signal représentatif du niveau de liquide mesuré par le flotteur de façon à ce qu'un témoin visuel, lumineux ou sonore du système de détection de fuite informe l'opérateur de la fuite.

Selon une autre particularité, la poche intérieure de la cuve du conteneur est fixée de façon étanche à la cuve au niveau des conduites de remplissage et de vidange, du filtre à air anti-odeur, du système de détection de fuite et du système de détection du niveau de remplissage.

Selon une autre particularité, l'isolant et la bâche de protection sont disposés sur le conteneur de telle manière qu'ils laissent libre les conduites de remplissage et de vidange, le filtre à air anti-odeur, le système de détection de fuite et le système de détection du niveau de remplissage.

Selon une autre particularité, la poche intérieure de la cuve est en polyéthylène haute densité (PEHD) ou tous autres matériaux de type plastique présentant des caractéristiques de souplesse et de résistance ou encore en matériau semi-rigide, est fabriquée sans soudure pour éviter qu'elle ne se perce et est insensible à la corrosion.

Selon une autre particularité, la conduite de remplissage et la conduite de vidange ne forme qu'une seule conduite destinée à la fois pour le remplissage et pour la vidange de la poche de la cuve du conteneur, cette conduite de remplissage et de vidange étant prévue sur le dessus de la cuve, comportant une extrémité faisant saillie à l'extérieur de la cuve, débouchant à l'intérieur de la poche de la cuve et comportant à son extrémité libre un connecteur apte à recevoir à la fois le connecteur d'un conduit flexible ou mobile d'un dispositif de pompage et le connecteur d'un véhicule de collecte ou de récupération de liquide usagé.

Selon une autre particularité, la conduite de remplissage et la conduite de vidange font saillie à l'extérieur de la cuve du conteneur, débouchent dans la poche et sont équipées respectivement à leur extrémité libre d'un connecteur, le connecteur de la conduite de remplissage permettant de raccorder un conduit flexible ou mobile d'un dispositif de pompage pour vider un conteneur mobile de plus petite dimension que le conteneur et le connecteur, dont les parties d'interconnexions sont de formes non-standards de la conduite de vidange, permettant de raccorder le conduit de pompage d'un véhicule de récupération équipé d'un connecteur de forme complémentaire à celui monté sur la conduite de vidange.

Selon une autre particularité, l'extrémité libre de la conduite de remplissage est équipée d'un élément filtrant permettant de retenir les particules en suspension présentes dans le liquide usagé.

Selon une autre particularité, la conduite de vidange débouche dans un bossage, de forme cylindrique de diamètre supérieur au diamètre de la conduite de vidange ou de forme hémisphérique, réalisé dans le fond de la cuve et formant un réceptacle de façon à ce qu'elle soit positionnée à un niveau situé en deçà du fond de la cuve pour aspirer tout le liquide stocké dans la poche de la cuve, hormis une petite quantité correspondant sensiblement au volume du bossage moins la profondeur d'enfoncement de la conduite de vidange dans le bossage.

Selon une autre particularité, une des extrémités de la conduite de vidange comprend une crépine évitant l'aspiration de déchets ou débris présent dans la poche de la cuve.

Selon une autre particularité, le connecteur de la conduite de remplissage et le connecteur de la conduite de remplissage et de vidange peuvent être équipés d'un adaptateur permettant de recevoir le goulot d'un entonnoir pour qu'un opérateur puisse aisément déverser du liquide usagé contenu dans un récipient dans la cuve.

Selon l'invention, le système de chauffage comporte des éléments chauffants disposés sur les parois latérales externes de la cuve pour permettre par conduction de chauffer uniformément le volume de liquide usagé stocké dans la poche de la cuve.

Selon une autre particularité, le système de chauffage est commandé en permanence par régulation par un système de commande disposé sur le dessus de la cuve.

Selon une autre particularité, les éléments chauffants du système de chauffage sont couplées à un dispositif de régulation, comprenant notamment un capteur de température, de sorte que les éléments chauffants ne sont alimentés que lorsque la température du liquide est inférieure à sa température de fusion.

Selon une autre particularité, le système de commande électrique comprend au moins :
- un élément de réception destiné à recevoir les informations relatives à la température du liquide usagé stocké dans la poche de la cuve issu du dispositif de régulation ;
- un module de traitement des informations relatives à la température du liquide usagé ; et
- un élément d'émission destiné à envoyer les consignes de commande de l'alimentation du système de chauffage lorsque la température du liquide est inférieure à sa température de fusion pour maintenir le liquide stocké dans la poche de la cuve à une température supérieure à sa température de solidification.

Selon une autre particularité, des témoins de non-fonctionnement sont installés sur les éléments chauffants du système de chauffage pour avertir l'utilisateur qu'au moins un élément chauffant du système de chauffage ne fonctionne plus.

Selon une autre particularité, le système de détection du niveau de remplissage est de type mécanique tel qu'une jauge et peut être remplacée par tout autre dispositif mécanique ou électronique d'indication de niveau.

Selon une autre particularité, la cuve est en métal et de forme sensiblement parallélépipédique rectangle.

Selon une autre particularité, la palette en métal comprend des ouvertures aménagées pour pouvoir utiliser un transpalette ou un chariot élévateur soit dans le sens de la longueur de la cuve soit dans le sens de la largeur de la cuve.

Selon une autre particularité, au moins deux parois latérales verticales, disposées en vis-à-vis, de la cuve sont chacune munies d'une poignée pour assurer une manutention manuelle aisée du conteneur.

Selon une autre particularité, les dimensions de la cuve sont choisies pour répondre au besoin spécifique de stockage de chaque utilisateur et aux contraintes de périodicité de la collecte du liquide usagé.

Selon une autre particularité, le liquide est de l'huile alimentaire, des produits pétroliers, des lubrifiants, des huiles hydrauliques, des produits inflammables.

L'invention sera mieux comprise et d'autres buts, caractéristiques, détails et avantages de celle-ci apparaîtront plus clairement au cours de la description explicative qui va suivre faite en référence aux figures annexées données à titre d'exemples non limitatifs dans lesquelles :
- la figure 1 représente un schéma du conteneur de récupération d'huile alimentaire usagée selon l'invention ;

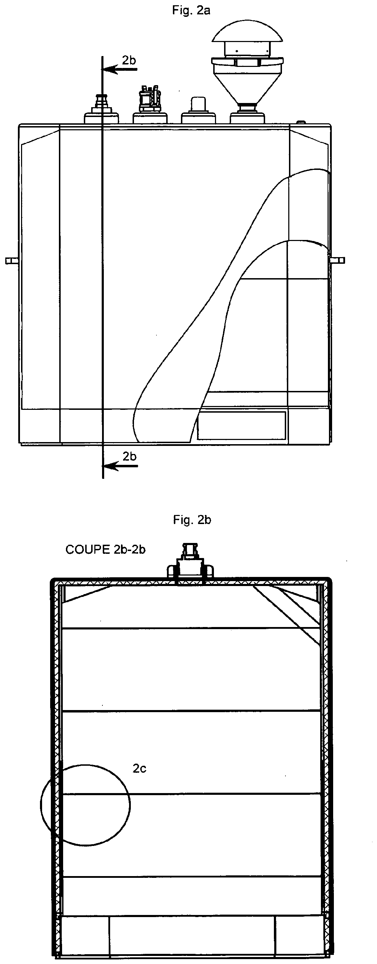

- la figure 2a représente un schéma du conteneur de récupération d'huile alimentaire selon l'invention ;
- la figure 2b représente une vue selon la coupe 2b-2b du conteneur de récupération d'huile alimentaire usagée.

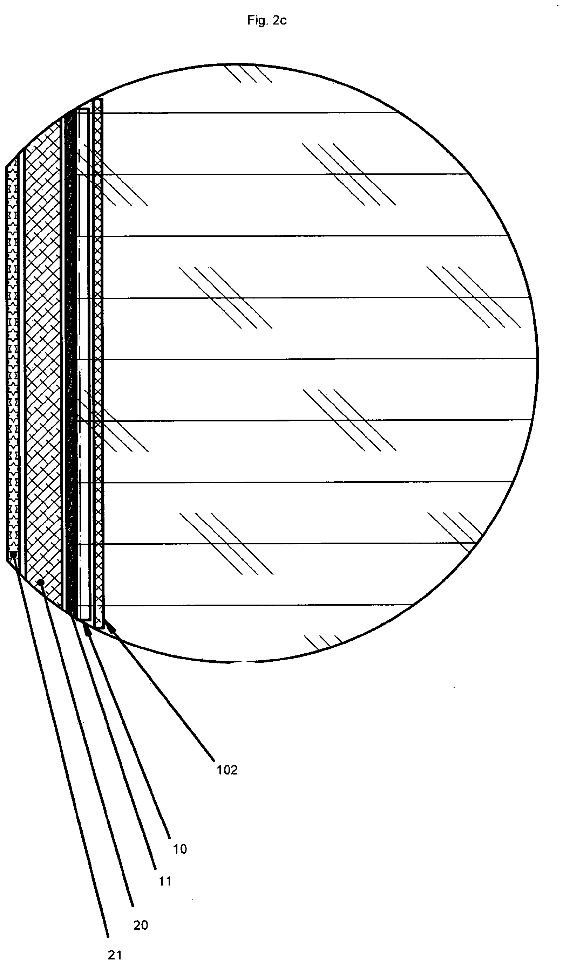

- la figure 2c représente une vue de l'élément 2c du conteneur de récupération d'huile alimentaire usagée selon l'invention.

L'invention concerne un conteneur (1) de récupération d'huile alimentaire usagée permettant le stockage en extérieur ou en intérieur de l'huile sans dégradation de ses qualités, le chauffage de façon autonome de l'huile alimentaire et autorisant une vidange sous forme liquide de l'huile alimentaire.

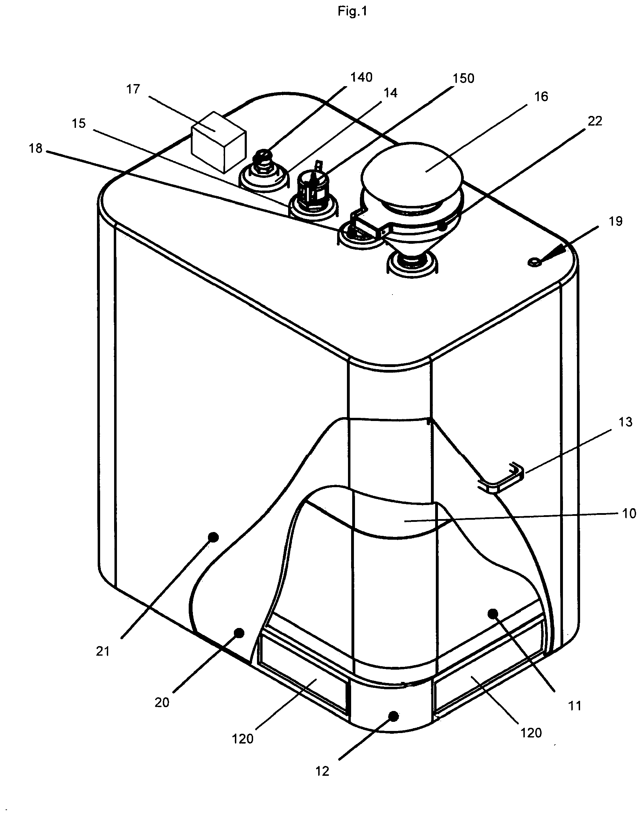

En référence à la figure 1, le conteneur (1) selon l'invention de forme sensiblement parallélépipédique rectangle comprend une cuve en métal (10) de forme sensiblement parallélépipédique rectangle qui comprend un fond (100) relié à un dessus (101) par des parois latérales verticales. Un système de chauffage (11) est fixé sur les parois latérales verticales externes de la cuve (10).

Il est à noter que la description fait référence à un conteneur (1) de récupération d'huile alimentaire usagée mais la cuve (10) du conteneur (1) est également adaptée pour recevoir un volume déterminé de liquide, comme du fuel, du gasoil, du gasoil agricole, des lubrifiants, des liquides classées, des huiles hydrauliques ou caloporteuses ou non combustibles ou encore usagées avec un point éclair supérieur à 55°C.

La cuve (10) équipée du système de chauffage (11) est recouverte par un isolant (20) puis une bâche de protection (21). La cuve (10) équipée du système de chauffage (11) et recouverte par l'isolant (20) et la bâche de protection (21) est montée sur une palette en métal (12) permettant la manutention de l'ensemble (10, 11, 20, 21) par l'intermédiaire de dispositifs de levages conventionnels tels qu'un transpalette ou un chariot élévateur. La palette en métal (12) comprend des ouvertures (120) aménagées pour pouvoir utiliser un transpalette ou un chariot élévateur soit dans le sens de la longueur de la cuve (10) soit dans le sens de la largeur la cuve (10).

Il est à noter que ce dispositif permet aussi bien le stockage en intérieur comme en extérieur.

En outre, au moins deux parois latérales verticales, disposées en vis-à-vis, de la cuve (10) et le système de chauffage (11) sont chacune munies d'une poignée (13) pour assurer une manutention manuelle aisée du conteneur (1).

La cuve (10) est en métal et toutes les jointures de la cuve (10) sont soudées. Les dimensions de la cuve (10) sont choisies pour répondre au besoin spécifique de stockage de chaque utilisateur et aux contraintes de périodicité de la collecte de l'huile alimentaire.

La cuve (10) du conteneur (1) comprend à l'intérieur une poche (102) prévue pour recevoir un volume déterminé, par exemple, de 700 ou 1000 litres d'huile alimentaire usagée en fonction de la quantité de consommation d'huile alimentaire des établissements de restauration, le volume de la poche (102) étant sensiblement égal au volume de la cuve en métal (10).

Par exemple, la cuve (10) d'une capacité de 700 litres comporte sensiblement une longueur de 1,1 mètres, une largeur de 0,7 mètres et une hauteur de 0,9 mètres et la cuve (10) d'une capacité de 1000 litres comporte sensiblement une longueur de 1.1 mètres, une largeur de 0,7 mètres et une hauteur de 1,3 mètres.

La poche intérieure (102) de la cuve (10) est en polyéthylène haute densité (PEHD) ou tous autres matériaux de type plastique présentant des caractéristiques de souplesse et de résistance ou encore en matériau semi-rigide. De façon avantageuse, la poche intérieure (102) est fabriquée sans soudure pour éviter qu'elle ne se perce et est insensible à la corrosion contrairement aux cuves en métal dans lesquelles était versée directement l'huile alimentaire usagée.

De façon avantageuse, la cuve (10) munie de la poche (102) permet de répondre aux exigences de la réglementation qui impose, pour tout liquide alimentaire, produit pétrolier ou liquide inflammable, d'avoir un bac de rétention si le conteneur dudit liquide ou produit se rompt.

En outre et de façon avantageuse, le conteneur (1) est prévu pour des établissements de restauration à faible, moyenne ou forte consommation d'huiles alimentaires.

Le choix de la valeur de la largeur de la cuve (10) est déterminé de façon à pouvoir manipuler le conteneur (1) dans l'embrasure d'une porte. De même, la hauteur de la cuve (10) est déterminée pour qu'un opérateur puisse observer ou atteindre facilement le dessus de la cuve (10). D'autres dimensions peuvent être choisies en fonction notamment des capacités de stockage souhaitées et des contraintes d'implantation du conteneur (1) et pour obtenir un encombrement minimum pour une contenance maximum.

Une première conduite (14) dite de remplissage et une deuxième conduite (15) dite de pompage ou vidange de la cuve (10) sont prévues sur le dessus (101) de la cuve (10). Les conduites de remplissage (14) et de pompage (15) font saillie à l'extérieur de la cuve (10) du conteneur (1), débouchent dans la poche (102) et sont équipées respectivement à leur extrémité libre d'un connecteur (140, 150).

Le connecteur (140) de la conduite de remplissage (14) permet de raccorder un conduit flexible ou mobile d'un dispositif de pompage, par exemple, une pompe manuelle ou une pompe électrique d'un transbordeur pour vider un conteneur mobile de plus petite dimension que le conteneur (1) selon l'invention, le conteneur de plus petite dimension étant par exemple monté de façon amovible ou fixe sur le transbordeur pour amener au plus près les conteneurs d'huile alimentaire usagée pour le transvasement de l'huile dans la poche (102) de la cuve (10).

L'extrémité de la conduite de remplissage (14) peut également être équipée d'un élément filtrant permettant de retenir les particules en suspension présentes dans l'huile alimentaire usagée.

La conduite de remplissage (14) de la cuve (10) fait saillie uniquement à l'extérieur de la cuve (10) tandis que la conduite de vidange (15) de la cuve (10) comprend une première extrémité qui débouche à l'extérieur de la cuve (10) en faisant saillie et une deuxième extrémité qui débouche à l'intérieur de la poche (102) de la cuve (10) au voisinage du fond (100) de la cuve (10). La distance entre la deuxième extrémité et le fond (100) de la cuve (10) est choisie pour permettre une aspiration de la quasi-totalité de l'huile alimentaire stockée dans la poche (102) de la cuve (10).

Selon une variante de réalisation, la deuxième extrémité de la conduite de vidange (15) débouche dans un bossage réalisé dans le fond (100) de la cuve (10) et formant un réceptacle. La deuxième extrémité de la conduite de vidange (15) est alors positionnée à un niveau situé en deçà du fond (100) de la cuve (10). Par conséquent, puisque la poche (102) épouse sensiblement la forme géométrique de la cuve (10), lors de la vidange de la poche (102) de la cuve (10) par aspiration, toute l'huile, hormis une petite quantité correspondant sensiblement au volume du bossage moins la profondeur d'enfoncement de la conduite de vidange (15) dans le bossage, est aspirée. De façon avantageuse, cette caractéristique permet alors de conserver une quantité négligeable d'huile stagnant dans le fond (100) de la poche (102) de la cuve (10). En effet, une quantité trop importante d'huile stagnant dans le fond (100) de la poche (102) de la cuve (10) générerait alors une prolifération de bactéries préjudiciables à la qualité de l'huile usagée qui serait introduite de nouveau dans la poche (102) de la cuve (10). De même, pour améliorer l'efficacité du pompage, le fond (100) de la cuve (10) peut comprendre au moins une pente dont la partie basse comprend le bossage.

Selon la variante de réalisation, le bossage est, par exemple, de forme cylindrique de diamètre supérieur au diamètre de la conduite de vidange (15). Dans une autre variante de réalisation, le bossage est hémisphérique.

Dans une variante de réalisation, la deuxième extrémité de la conduite de vidange (15) comprend une crépine évitant l'aspiration de déchets ou débris présent dans la poche (102) de la cuve (10). De même, la première extrémité de la conduite de vidange (15) comprend le connecteur (150) dont les parties d'interconnexions sont de formes non-standards. Ainsi, seul un véhicule de récupération équipé d'un connecteur de forme complémentaire à celui monté sur la conduite de vidange (15) peut être raccordé à la cuve (10), ce qui permet de s'assurer que l'intermédiaire ayant effectué la collecte est un intermédiaire particulier possédant le connecteur adéquat.

Dans une variante de réalisation (non représentée) du conteneur (1), une unique conduite destinée à la fois pour le remplissage et pour le pompage de la poche (102) de la cuve (1) du conteneur (1) est prévue sur le dessus (101) de la cuve (10). Cette unique conduite comporte une extrémité faisant saillie à l'extérieur de la cuve (1) et débouche à l'intérieur de la poche (102) de la cuve (10). Cette unique conduite comporte à son extrémité libre un connecteur apte à recevoir à la fois le connecteur d'un conduit flexible ou mobile d'un dispositif de pompage et le connecteur d'un véhicule de collecte ou de récupération de l'huile alimentaire usagée.

Il est à noter que le connecteur (140) de la conduite de remplissage (14) et dans le cas de la variante de réalisation décrite ci-dessus, le connecteur de la conduite de remplissage et de vidange peuvent être équipés d'un adaptateur permettant de recevoir le goulot d'un entonnoir pour qu'un opérateur puisse aisément déverser de l'huile alimentaire usagée contenue dans un récipient dans la cuve (10).

Le dessus de la cuve (10) comprend également un évent formant notamment une prise d'air. Cet évent peut être obturé par un filtre à air anti-odeur (16) permettant de supprimer, ou tout au moins réduire, la diffusion d'odeur liée au stockage de l'huile alimentaire usagée dans la poche (102) de la cuve (10) ou d'un système de sécurité de trop plein de la poche (102) de la cuve (10).

Egalement, un entonnoir à ouverture sécurisée (22) peut venir se fixer entre ledit évent et le filtre à particule (16). La présence de cet entonnoir (22) à ouverture sécurisée permet à un utilisateur autorisé de disposer d'un moyen secondaire efficace pour remplir le conteneur en huile usagée.

Selon l'invention, le conteneur (1) comprend également le système de chauffage (11) comportant des éléments chauffants, par exemple une plaque chauffante, fixés sur les parois latérales verticales externes de la cuve (10). Ce système de chauffage (11) n'est pas en contact avec l'huile alimentaire usagée stockée dans la poche (102) de la cuve (10) puisque le système de chauffage (11) est disposé sur la cuve (10). Ce système de chauffage (11) permet par conduction de chauffer uniformément le volume d'huile alimentaire usagée stockée dans la poche (102) de la cuve (10).

Ce système de chauffage (11) est commandé et régulé en permanence par un système de commande (17), encore appelé boîtier d'asservissement électrique, disposé par exemple sur le dessus (100) de la cuve (10).

La fonction essentielle du système de chauffage (11) est de fournir en permanence suffisamment d'énergie calorifique pour liquéfier toute l'huile alimentaire usagée stockée dans la poche (102) de la cuve (10) pour permettre à tout moment la collecte de l'huile alimentaire usagée stockée dans le conteneur (1). Par conséquent, le système de chauffage (11) doit maintenir en permanence l'huile alimentaire à une température supérieure à la température de solidification qui est de l'ordre de 30°C.

Dans une variante de réalisation, des témoins de non-fonctionnement sont installés sur les éléments chauffants du système de chauffage (11). Ces témoins peuvent être lumineux ou sonore et installés sur une surface visible du conteneur (1). Ainsi, dès qu'au moins un élément chauffant ne fonctionne plus l'opérateur est averti et peut alors demander le remplacement de l'élément chauffant défectueux. Ainsi l'intérêt de mettre en place au moins un ensemble d'au moins deux éléments chauffants à l'intérieur du boîtier du système de chauffage (1) est qu'il est très peu probable que tous les éléments chauffants seront défectueux en même temps. Par conséquent, il sera toujours possible de liquéfier toute l'huile alimentaire présente dans la poche (102) de la cuve (10) et de vidanger la poche (102) de la cuve (10) en attendant de remplacer l'élément chauffant défectueux.

Les éléments chauffants du système de chauffage (11) sont couplés à un dispositif de régulation (non représenté), comprenant notamment un capteur de température, de sorte que les éléments chauffants ne sont alimentés que lorsque la température de l'huile alimentaire est inférieure à la température de fusion, augmentée par exemple de 15°C, avec un écart de + ou - 5°C. Ainsi, si la température de fusion de l'huile alimentaire usagée est de 25°C, les éléments chauffants ne seront plus alimentés dès que la température de l'huile n'est plus comprise dans l'intervalle 35°C - 45°C. De cette façon, puisque l'huile est en permanence liquide, la vidange de la poche (102) de la cuve (10) est possible à tout moment.

De manière non limitative, les éléments chauffants sont, par exemple, de type DYNAFLEX.

Le système de commande (17) électrique comprend au moins :
- un élément de réception destiné à recevoir les informations relatives à la température de l'huile alimentaire usagée stockée dans la poche (102) de la cuve (10) issu du dispositif de régulation ;
- un module de traitement des informations relatives à la température de l'huile alimentaire usagée ; et
- un élément d'émission destiné à envoyer les consignes de commande de l'alimentation du système de chauffage (11) lorsque la température de l'huile alimentaire est inférieure à la température de fusion pour maintenir l'huile alimentaire usagée stockée dans la poche (102) de la cuve (10) à une température supérieure à la température de solidification.

En outre, le conteneur (1) est équipé d'un système de détection du niveau de remplissage (18) de la poche (102) de la cuve (10). Le témoin lumineux ou visuel ou encore sonore du système de détection du niveau de remplissage (18) est disposé sur le dessus de la cuve (10) pour permettre d'informer l'opérateur de l'état de remplissage de la poche (102) de la cuve (10) et par conséquent, de prévoir une éventuelle collecte de l'huile alimentaire usagée par un véhicule de récupération. De manière non limitative, le système de détection du niveau de remplissage (18) est de type mécanique tel qu'une jauge et peut être remplacée par tout autre dispositif mécanique ou électronique d'indication de niveau.

Le conteneur (1) est également équipé d'un système de détection de fuite (19) qui est constitué d'un flotteur monté sur une tige verticale qui est équipée d'un système électronique générant un signal représentatif du niveau d'huile mesurée par le flotteur ou d'un système mécanique indiquant par un témoin visuel le niveau de liquide mesuré par le flotteur. Le flotteur et la tige verticale sont disposés dans le dégagement formé par la cuve (10) et la poche (102) de façon à ce que le flotteur soit disposé à proximité du fond (100) de la cuve (10) et entre la cuve (10) et la poche (102). Si la poche (102) fuit ou se rompt, l'huile alimentaire usagée se déverse à l'extérieur de la poche (102) mais dans la cuve (10) ce qui fait remonter le flotteur. Dans le cas c'un système électronique, celui-ci génère le signal représentatif du niveau d'huile mesurée par le flotteur de façon à ce qu'un témoin visuel, lumineux ou sonore du système de détection de fuite (19) informe l'opérateur de la fuite. Ce témoin visuel, lumineux ou sonore du système de détection de fuite (19) est disposé par exemple, sur le dessus (101) de la cuve (10).

L'isolant (20) est mis en place par chemisage, par collage ou par des éléments de fixation de type vis-écrou sur le dessus (101) et sur les parois latérales extérieures de la cuve (10) et éventuellement sous le conteneur (1). De manière non limitative, cet isolant est par exemple de type Airflex.

L'épaisseur et la densité de l'isolant (20) sont déterminées de façon à ce qu'elles soient suffisantes pour que le système de chauffage (11) de dimension réduite puisse maintenir avec une puissance de chauffage faible convenablement régulée l'huile alimentaire à une température supérieure à la température de solidification. De façon non limitative, le système de chauffage possède une épaisseur réduite qui est avantageusement comprise entre 2 mm et 3 mm.

De façon non limitative, l'isolant possède une épaisseur comprise entre 5 mm et 20 mm.

De façon non limitative, l'isolant a une densité comprise entre 200 g/m² et 1000 g/m².

Dans un exemple de réalisation, l'épaisseur de l'isolant (20) de 10 mm avec une densité de 615 g/m² permet de maintenir l'huile alimentaire usagée stockée dans une poche (102) d'une cuve (10) d'une capacité de 700 litres à une température supérieure à la température de solidification avec une puissance de chauffage comprise entre 20 W et 200 W. De façon avantageuse, la puissance de chauffage est égale à 57 watts.

De façon avantageuse, l'isolant (20) réunit les caractéristiques particulières entrant dans le cadre des Normes Françaises et répond aux exigences des normes de sécurité et de santé.

Avantageusement, la résistance mécanique de l'isolant est égale à 300 kg/m².

Avantageusement, l'isolant est situé dans la classe M1 de résistance au feu selon la norme NF P. 92.507.

La surface de dessus (101) et les parois latérales verticales de la cuve (10) recouvertes de l'isolant (20) sont ensuite recouvertes de la bâche de protection (21). De manière non limitative, cette bâche de protection (21) est de type de celles utilisées pour les toits de camion, pour le domaine agricole, pour la sérigraphie ou encore les tauds de bateaux. Cette bâche de protection (21) est constituée par exemple en polyester haute ténacité et comporte des caractéristiques d'adhérence, de tenue au froid et à la chaleur comprise, de façon non limitative, entre -30°C et 70°C, d'ignifugation et de résistance à la rupture et à la déchirure.

La caractéristique d'ignifugation est égale au moins, de façon non limitative, à 100 mm/min selon la norme DIN 75 200.

La caractéristique d'adhérence est égale au moins, de façon non limitative, à 8 daN/5 cm² selon la norme NF EN ISO 2411.

La résistance à la rupture (chaîne/trame) est égale au moins, de façon non limitative, à 220/210 daN selon la norme NF EN ISO 1421.

La résistance à la déchirure (chaîne/trame) est égale au moins, de façon non limitative, à 30/25 daN selon la norme DIN 53363.

De façon non limitative, la bâche a une densité égale à 680 g/m².

Il est à noter que la poche intérieure (102) de la cuve (10) du conteneur (1) est fixée de façon étanche à la cuve (10) au niveau des conduites de remplissage et de vidange (14, 15), du filtre à air anti-odeur (16), du système de détection de fuite (19) et du système de détection du niveau de remplissage (18).

En outre, l'isolant (20) et la bâche de protection (21) sont disposés sur le conteneur (1) comme décrit précédemment de telle manière qu'ils laissent libre les conduites de remplissage et de vidange (14, 15), le filtre à air anti-odeur (16), le système de détection de fuite (19) et le système de détection du niveau de remplissage (18).

Un des avantages de l'invention est que le conteneur (1) de récupération de l'huile alimentaire usagée permet de maintenir en permanence l'huile alimentaire usagée à une température supérieure à la température de solidification avec une mise en oeuvre simple, à faible cout (le nombre d'éléments formant le conteneur (1) est réduit) et en limitant le nombre de pannes du conteneur (1).

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Conteneur (1) de récupération de liquides usagés comprenant une cuve (10) fermée de volume déterminé comprenant sur le dessus (101) une conduite de remplissage (14) en liquide usagé et une conduite de vidange (15) par aspiration du liquide stocké la cuve (10) comprennant à l'intérieur une poche (102), de volume sensiblement égal au volume de la cuve (10), destinée à recevoir le liquide usagé, un système de chauffage (11) étant fixé sur les parois externes latérales verticales de la cuve (10) pour pouvoir maintenir en permanence, par régulation, le liquide usagé stocké dans la poche (102) de la cuve (10) à une température supérieure à sa température de solidification et permettre la collecte du liquide usagé à tout moment, la cuve (10) étant recouverte par un isolant (20) puis une bâche de protection (21) pour éviter les déperditions thermiques, permettre le chauffage du liquide avec une puissance faible ainsi qu'un stockage en intérieur comme en extérieur, le système comportant au moins un témoin lumineux ou visuel ou sonore sur le dessus de la cuve (10) pour avertir l'opérateur de l'état de remplissage de la poche (102) de la cuve (10) et par conséquent, de prévoir une éventuelle collecte du liquide usagé par un véhicule de récupération, la poche (102) épousant la forme géométrique de la cuve (10), la poche (102) étant fixée de façon étanche à la cuve (10) au niveau des conduites de remplissage et de vidange.

2. Conteneur (1) selon la revendication 1, **caractérisé en ce que** la cuve (10) équipée du système de chauffage (11) et recouverte par l'isolant (20) et la bâche de protection (21) est montée sur une palette de transport (12).

3. Conteneur (1) selon une des revendications 1 et 2, **caractérisé en ce que** le conteneur (1) comporte un système de détection du niveau de remplissage (18) de la poche (102) de la cuve (10) prévu sur le dessus de la cuve (10).

4. Conteneur (1) selon une des revendications 1 à 3, **caractérisé en ce que** la cuve (10) comporte un évent formant notamment une prise d'air, l'évent étant obturé par un filtre à air anti-odeur (16) permettant de supprimer, ou tout au moins réduire, la diffusion d'odeur liée au stockage du liquide usagé dans la poche (102) de la cuve (10) ou d'un système de sécurité de trop plein de la poche (102) de la cuve (10) ou d'un ensemble composé d'un entonnoir à ouverture sécurisée (22) et d'un filtre à air anti-odeur (16).

5. Conteneur (1) selon une des revendications 1 à 4, **caractérisé en ce que** l'épaisseur et la densité de l'isolant (20) sont déterminées de façon à ce qu'elles soient suffisantes pour que le système de chauffage (11) puisse maintenir avec une puissance de chauffage faible comprise entre 20 W et 200 W, convenablement régulée, le liquide usagé à une température supérieure à sa température de solidification.

6. Conteneur (1) selon une des revendications 1 à 5, **caractérisé en ce qu'**un système de détection de fuite (19) est prévu sur le dessus de la cuve (10) et comporte un flotteur monté sur une tige verticale équipée soit d'un système électronique générant un signal représentatif du niveau de liquide mesuré par le flotteur, soit d'un système mécanique indiquant par un témoin visuel le niveau de liquide mesuré par le flotteur, le flotteur et la tige verticale étant disposés dans le dégagement formé par la cuve (10) et la poche (102) de façon à ce que si la poche (102) fuit ou se rompt, le liquide usagé se déverse à l'extérieur de la poche (102) mais dans la cuve (10) ce qui fait remonter le flotteur, dans le cas d'un système électronique, celui-ci génère le signal représentatif du niveau de liquide mesuré par le flotteur de façon à ce qu'un témoin visuel, lumineux ou sonore du système de détection de fuite (19) informe l'opérateur de la fuite.

7. Conteneur (1) selon une des revendications 1 à 6, **caractérisé en ce que** la poche intérieure (102) de la cuve (10) est en polyéthylène haute densité (PEHD) ou tous autres matériaux de type plastique présentant des caractéristiques de souplesse et de résistance ou encore en matériau semi-rigide, est fabriquée sans soudure pour éviter qu'elle ne se perce et est insensible à la corrosion.

8. Conteneur (1) selon les revendications 1 à 7, **caractérisé en ce que** la conduite de remplissage (14) et la conduite de vidange (15) ne forme qu'une seule conduite destinée à la fois pour le remplissage et pour la vidange de la poche (102) de la cuve (10) du conteneur (1), cette conduite de remplissage et de vidange étant prévue sur le dessus (101) de la cuve (10), comportant une extrémité faisant saillie à l'extérieur de la cuve (10), débouchant à l'intérieur de la poche (102) de la cuve (10) et comportant à son extrémité libre un connecteur apte à recevoir à la fois le connecteur d'un conduit flexible ou mobile d'un dispositif de pompage et le connecteur d'un véhicule de collecte ou de récupération de liquide usagé.

9. Conteneur (1) selon la revendication 8, **caractérisé en ce que** l'extrémité libre de la conduite de remplissage (14) est équipée d'un élément filtrant permettant de retenir les particules en suspension présentes dans le liquide usagé.

10. Conteneur (1) selon la revendication 8, **caractérisé en ce que** le connecteur (140) de la conduite de remplissage (14) et le connecteur de la conduite de remplissage et de vidange peuvent être équipés d'un adaptateur permettant de recevoir le goulot d'un entonnoir (22) pour qu'un opérateur puisse aisément déverser du liquide usagé contenu dans un récipient dans la cuve (10).

11. Conteneur (1) selon une des revendications 1 à 10, **caractérisé en ce que** le système de chauffage (11) comporte des éléments chauffants disposés sur les parois latérales externes de la cuve (10) pour permettre par conduction de chauffer uniformément le volume de liquide usagé stocké dans la poche (102) de la cuve (10).

12. Conteneur (1) selon une des revendications 1 à 11, **caractérisé en ce que** le système de chauffage (11) est commandé et régulé en permanence par un système de commande (17) disposé sur le dessus (100) de la cuve (10).

13. Conteneur (1) selon la revendication 11, **caractérisé en ce que** les éléments chauffants du système de chauffage (11) sont couplées à un dispositif de régulation, comprenant notamment un capteur de température, de sorte que les éléments chauffants ne sont alimentés que lorsque la température du liquide est inférieure à sa température de fusion.

14. Conteneur (1) selon la revendication 12, **caractérisé en ce que** le système de commande (17) électrique comprend au moins :
- un élément de réception destiné à recevoir les informations relatives à la température du liquide usagé stocké dans la poche (102) de la cuve (10) issu du dispositif de régulation ;
- un module de traitement des informations relatives à la température du liquide usagé ; et
- un élément d'émission destiné à envoyer les consignes de commande de l'alimentation du système de chauffage (11) lorsque la température du liquide est inférieure à sa température de fusion pour pouvoir maintenir le liquide stocké dans la poche (102) de la cuve (10) à une température supérieure à sa température de solidification.

15. Conteneur (1) selon la revendication 3, **caractérisé en ce que** le système de détection du niveau de remplissage (18) est de type mécanique tel qu'une jauge et peut être remplacée par tout autre dispositif mécanique ou électronique d'indication de niveau.

## Patentansprüche

1. Container (1) zum Zurückgewinnen von gebrauchten Flüssigkeiten, umfassend eine geschlossene Wanne (10) mit einem bestimmten Volumen, die oben (101) eine Füllleitung (14) für gebrauchte Flüssigkeit und eine Entleerungsleitung (15) zum Absaugen der gespeicherten Flüssigkeit umfasst, wobei die Wanne (10) im Innern eine Tasche (102) mit einem Volumen umfasst, das im Wesentlichen gleich dem Volumen der Wanne (10) ist, bestimmt zum Aufnehmen der gebrauchten Flüssigkeit, wobei ein Heizsystem (11) an den äußeren seitlichen vertikalen Wänden der Wanne (10) befestigt ist, um die in der Tasche (102) der Wanne (10) gespeicherte gebrauchte Flüssigkeit permanent auf einer Temperatur über ihrer Verfestigungstemperatur halten zu können und um das Auffangen der gebrauchten Flüssigkeit in jedem Moment zuzulassen, wobei die Wanne (10) mit einem Isoliermittel (20), dann mit einer Schutzabdeckung (21) bedeckt ist, um Wärmeverluste zu vermeiden, Zulassen des Erhitzens der Flüssigkeit mit einer geringen Leistung sowie das Speichern im Innenbereich wie im Außenbereich, wobei das System wenigstens einen Leucht- oder visuellen oder akustischen Melder am oberen Ende der Wanne (10) zum Warnen des Bedieners über den Füllzustand der Tasche (102) der Wanne (10) und folglich zum Vorhersehen eines eventuellen Auffangens von gebrauchter Flüssigkeit durch ein Rückgewinnungsfahrzeug umfasst, wobei die Tasche (102) sich der geometrischen Form der Wanne (10) anpasst, wobei die Tasche (102) auf dichte Weise an der Wanne (10) an den Füll- und Entleerungsleitungen befestigt ist.

2. Container (1) nach Anspruch 1, **dadurch gekennzeichnet, dass** die Wanne (10), die mit dem Heizsystem (11) ausgestattet und mit dem Isoliermittel (20) und der Schutzabdeckung (21) versehen ist, auf einer Transportpalette (12) montiert ist.

3. Container (1) nach einem der Ansprüche 1 und 2, **dadurch gekennzeichnet, dass** der Container (1) ein am oberen Ende der Wanne (10) vorgesehenes System zum Erkennen des Füllstands (18) der Tasche (102) der Wanne (10) umfasst.

4. Container (1) nach einem der Ansprüche 1 bis 3, **dadurch gekennzeichnet, dass** die Wanne (10) eine Lüftung umfasst, die insbesondere einen Lufteinlass bildet, wobei die Lüftung mit einem Geruchsluftfilter (16) bedeckt ist, mit dem die Verbreitung von Geruch in Verbindung mit der Speicherung der gebrauchten Flüssigkeit in der Tasche (102) der Wanne (10) unterdrückt oder zumindest reduziert werden kann, oder eines Sicherheitssystems der Tasche (102) der Wanne (10) oder einer Baugruppe bestehend aus einem Trichter mit abgesicherter Öffnung (22) und einem Geruchsluftfilter (16).

5. Container (1) nach einem der Ansprüche 1 bis 4, **dadurch gekennzeichnet, dass** die Dicke und die Dichte des Isoliermittels (20) so bestimmt werden, dass sie ausreichen, damit das Heizsystem (11) mit einer geringen Heizleistung zwischen 20 W und 200 W, angemessen reguliert, die gebrauchte Flüssigkeit auf einer Temperatur über ihrer Verfestigungstemperatur halten kann.

6. Container (1) nach einem der Ansprüche 1 bis 5, **dadurch gekennzeichnet, dass** ein Verlusterkennungssystem (19) am oberen Ende der Wanne (10) vorgesehen ist und einen Schwimmer umfasst, der an einem vertikalen Stab montiert ist, ausgestattet entweder mit einem elektronischen System, das ein Signal erzeugt, das den vom Schwimmer gemessenen Flüssigkeitsstand repräsentiert, oder mit einem mechanischen System, das mit einem visuellen Melder den vom Schwimmer gemessenen Flüssigkeitsstand anzeigt, wobei der Schwimmer und der vertikale Stab in dem von der Wanne (10) und der Tasche (102) gebildeten Freiraum auf eine solche Weise angeordnet sind, dass, wenn die Tasche (102) ausläuft oder bricht, die gebrauchte Flüssigkeit auf die Außenseite der Tasche (102), aber in die Wanne (10) ausläuft, so dass der Schwimmer steigt, so dass im Falle eines elektronischen Systems das Signal erzeugt wird, das den vom Schwimmer gemessenen Flüssigkeitsstand repräsentiert, so dass ein visueller, Leucht- oder akustischer Melder des Leckerkennungssystems (10) den Bediener über das Leck informiert.

7. Container (1) nach einem der Ansprüche 1 bis 6, **dadurch gekennzeichnet, dass** die Innentasche (102) der Wanne (10) aus Polyethylen hoher Dichte (HDPE) oder aus anderen Materialien des Kunststofftyps gefertigt ist, die Elastizitäts- und Widerstandseigenschaften aufweisen, oder auch aus einem halbstarren Material, ohne Schweißen gefertigt, um Durchstechen zu vermeiden und Korrosionsbeständigkeit zu erzielen.

8. Container (1) nach den Ansprüchen 1 bis 7, **dadurch gekennzeichnet, dass** die Füllleitung (14) und die Entleerungsleitung (15) nur eine einzelne Leitung bilden, die gleichzeitig zum Füllen und Entleeren der Tasche (102) der Wanne (10) des Containers (1) bestimmt ist, wobei diese Füll- und Entleerungsleitung am oberen Ende (101) der Wanne (10) vorgesehen ist, mit einem Ende, das zur Außenseite der Wanne (10) ausragt, mündend im Innern der Tasche (102) der Wanne (10), an ihrem freien Ende mit einem Verbinder zum gleichzeitigen Aufnehmen des Verbinders einer flexiblen oder beweglichen Leitung einer Pumpvorrichtung und des Verbinders eines Fahrzeugs zum Aufnehmen oder Rückgewinnen der gebrauchten Flüssigkeit.

9. Container (1) nach Anspruch 8, **dadurch gekennzeichnet, dass** das freie Ende der Füllleitung (14) mit einem Filterelement ausgestattet ist, mit dem in der gebrauchten Flüssigkeit suspendierte Partikel zurückgehalten werden können.

10. Container (1) nach Anspruch 8, **dadurch gekennzeichnet, dass** der Verbinder (140) der Füllleitung (14) und der Verbinder der Füll- und Entleerungsleitung mit einem Adapter ausgestattet sein können, der den Hals eines Trichters (22) aufnehmen kann, damit ein Bediener die in einem Behältnis in der Wanne (10) enthaltene gebrauchte Flüssigkeit leicht ausschütten kann.

11. Container (1) nach einem der Ansprüche 1 bis 10, **dadurch gekennzeichnet, dass** das Heizsystem (11) Heizelemente umfasst, die an den lateralen Wänden außerhalb der Wanne (10) angeordnet sind, so dass das in der Tasche (102) der Wanne (10) gespeicherte Volumen an gebrauchter Flüssigkeit gleichmäßig durch Leitung erhitzt werden kann.

12. Container (1) nach einem der Ansprüche 1 bis 11, **dadurch gekennzeichnet, dass** das Heizsystem (11) permanent von einem am oberen Ende (100) der Wanne (10) angeordneten Steuersystem (17) gesteuert und reguliert werden kann.

13. Container (1) nach Anspruch 11, **dadurch gekennzeichnet, dass** die Heizelemente des Heizsystems (11) mit einer Reguliervorrichtung gekoppelt sind, die insbesondere einen Temperatursensor umfasst, so dass die Heizelemente nur dann versorgt werden, wenn die Temperatur der Flüssigkeit niedriger ist als ihre Fusionstemperatur.

14. Container (1) nach Anspruch 12, **dadurch gekennzeichnet, dass** das elektrische Steuersystem (17) wenigstens Folgendes umfasst:
- ein Empfangselement zum Empfangen der Informationen über die Temperatur der in der Tasche (102) der Wanne (10) gespeicherten gebrauchten Flüssigkeit, die von der Reguliervorrichtung ausgegeben wird;
- ein Modul zum Verarbeiten der Informationen in Bezug auf die Temperatur der gebrauchten Flüssigkeit; und
- ein Emissionselement zum Senden der Sollwerte zum Steuern der Versorgung des Heizsystems (11), wenn die Temperatur der Flüssigkeit niedriger ist als ihre Fusionstemperatur, damit die in der Tasche (102) der Wanne (10) gelagerte Flüssigkeit auf einer Temperatur über ihrer Verfestigungstemperatur gehalten werden kann.

15. Container (1) nach Anspruch 3, **dadurch gekennzeichnet, dass** das System zum Erkennen des Füllstands (18) vom mechanischen Typ wie ein Messgerät ist, und durch jedes andere mechanische oder elektrische Füllstandsanzeigegerät ersetzt werden kann.

## Claims

1. Container (1) for collecting waste liquidscomprising a closed tank (10) of a given volume comprising on the top (101) a pipe (14) for filling with waste liquid and a pipe (15) for emptying the stored liquid by suction, the tank (10) comprising in the interior a compartment (102), of a volume substantially equal to the volume of the tank (10), designed to receive the waste liquid, a heating system (11) being fixed to the vertical lateral external walls of the tank (10) in order to be able to permanently keep, by regulation, the waste liquid stored in the compartment (102) of the tank (10) at a temperature greater than its solidification temperature and to allow collection of the waste liquid at any time, the tank (10) being covered by insulation (20), then a protective canvas cover (21) to avoid thermal losses, allow heating of the liquid with weak power as well as storage indoors as well as outdoors, the system comprising at least one warning lamp or visual or sound indicator on the top of the tank (10) to warn the operator of the state of filling of the compartment (102) of the tank (10) and consequently to provide possible collection of the waste liquid by a recovery vehicle, the compartment (102) closely fitting the geometrical shape of the tank (10), the compartment (102) being fixed in sealing-tight relationship to the tank (10) at the level of the filling and emptying pipes.

2. Container (1) according to claim 1, **characterised in that** the tank (10) equipped with the heating system (11) and covered by the insulation (20) and the protective canvas cover (21) is mounted on a transport pallet (12).

3. Container (1) according to one of claims 1 and 2, **characterised in that** the container (1) comprises a system for detecting the level of filling (18) of the compartment (102) of the tank (10), provided on the top of the tank (10).

4. Container (1) according to one of claims 1 to 3, **characterised in that** the tank (10) comprises a vent forming in particular an air intake, the vent being blocked by an anti-odour air filter (16) making it possible to suppress, or at the very least reduce, the diffusion of odour connected with the storage of waste liquid in the compartment (102) of the tank (10) or an overflow safety system for the compartment (102) of the tank (10) or an assembly composed of a funnel with protected opening (22) and an anti-odour air filter (16).

5. Container (1) according to one of claims 1 to 4, **characterised in that** the thickness and density of the insulation (20) are determined so that they are sufficient for the heating system (11) to be able to keep the waste liquid at a temperature greater than its solidification temperature with a weak heating power of between 20 W and 200 W, suitably regulated.

6. Container (1) according to one of claims 1 to 5, **characterised in that** a leak detection system (19) is provided on the top of the tank (10) and comprises afloat mounted on a vertical rod equipped with either an electronic system generating a signal representing the level of liquid measured by the float, or a mechanical system indicating by a visual indicator the level of liquid measured by the float, the float and the vertical rod being disposed in thepassage formed by the tank (10) and the compartment (102) so that, if the compartment (102) leaks or breaks, the waste liquid flows to the exterior of the compartment (102) but in the tank (10), which causes the float to rise, in the case of an electronic system, the latter generates the signal representing the level of liquid measured by the float so that a warning lamp or visual or sound indicator for the leak detection system (19) informs the operator of the leak.

7. Container (1) according to one of claims 1 to 6, **characterised in that** the internal compartment (102) of the tank (10) is made of high-density polyethylene (HDPE) or any other materials of the plastic type having characteristics of flexibility and strength or else made of semi-rigid material, is manufactured without welding to prevent it from bursting and is insensitive to corrosion.

8. Container (1) according to claims 1 to 7, **characterised in that** the filling pipe (14) and the emptying pipe (15) form a single pipe designed for both filling and emptying of the compartment (102) of the tank (10) of the container (1), this filling and emptying pipe being provided on the top (101) of the tank (10), comprising one end projecting outside the tank (10), leading to the interior of the compartment (102) of the tank (10) and comprising at its free end a connector capable of receiving both the connector of a flexible or movable pipe of a pumping device and the connector of a vehicle for the collection or recovery of waste liquid.

9. Container (1) according to claim 8, **characterised in that** the free end of the filling pipe (14) is equipped with a filter element allowing retention of the suspended particles present in the waste liquid.

10. Container (1) according to claim 8, **characterised in that** the connector (140) of the filling pipe (14) and the connector of the filling and emptying pipe can be equipped with an adapter making it possible to receive the neck of a funnel (22) so that an operator can easily pour waste liquid contained in a receptacle into the tank (10).

11. Container (1) according to one of claims 1 to 10, **characterised in that** the heating system (11) comprises heating elements disposed on the external lateral walls of the tank (10) in order to make it possible by conduction to uniformly heat the volume of waste liquid stored in the compartment (102) of the tank (10).

12. Container (1) according to one of claims 1 to 11, **characterised in that** the heating system (11) is controlled and regulated permanently by a control system (17) disposed on the top (100) of the tank (10).

13. Container (1) according to claim 11, **characterised in that** the heating elements of the heating system (11) are coupled to a regulating device, comprising in particular a temperature sensor, so that the heating elements are supplied only when the temperature of the liquid is lower than its melting point.

14. Container (1) according to claim 12, **characterised in that** the electrical control system (17) comprises at least:
- a receivingelement designed to receive the information relating to the temperature of the waste liquid stored in the compartment (102) of the tank (10) coming from the regulating device;
- a module for processing the information relating to the temperature of the waste liquid; and
- an emitting element designed to send the instructions for controlling supply of the heating system (11) when the temperature of the liquid is lower than its melting point in order to be able to keep the liquid stored in the compartment (102) of the tank (10) at a temperature greater than its solidification temperature.

15. Container (1) according to claim 3, **characterised in that** the system for detecting the level of filling (18) is of the mechanical type such as a gauge and can be replaced by any other mechanical or electronic level-indicating device.
